# EUROPEAN PATENT SPECIFICATION

(11) **EP 1 445 823 B1**
(45) Date of publication and mention of the grant of the patent: **13.06.2007**
(21) Application number: 03445020.5
(22) Date of filing: 10.02.2003
(51) Int. Cl.: H01Q 1/24, H01Q 9/04, H01Q 1/38, H04B 1/38, H04M 1/02

(54) **Combined speaker and antenna component**
Kombinierte Lautsprecher- und Antennenkomponente
Composant combiné d' un haut-parleur et une antenne

(43) Date of publication of application: 11.08.2004
(73) Proprietor: Sony Ericsson Mobile Communications AB, 221 88 Lund (SE)
(72) Inventor: Wedel, Martin, 212 16 Malmö (SE); Anton, Georgeta, 214 63 Malmö (SE)
(74) Representative: Lindberg, Olle Nils Olof

(56) References cited:
- EP-A- 1 184 936
- EP-A- 1 294 051
- EP-A- 1 317 116
- DE-A- 10 052 909
- US-A- 6 031 505

## Description

### Field of the invention

The present invention relates generally to a communication terminal comprising an antenna for wireless communication purposes, and a speaker for conveying audio information to a user of the communication terminal. More specifically the invention relates to a communication terminal including a component which integrates said speaker and an antenna element, and to said component as such.

### Background

The mobile phone industry has had an enormous development both regarding quality of service and transmission capabilities, as well as the technology for producing advanced communications terminals. In only a couple of decades the communication systems have gone from analogue to digital, and at the same time the dimensions of the communication terminals have gone from briefcase size to the pocket size phones of today. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

In order to benefit from the capabilities of the transmission system, the future generation of phones will have a large display in order to perform multimedia input and output, and the picture quality will be of high importance. Still, the keypad or keyboard must be large enough to allow people to press one key at a time.

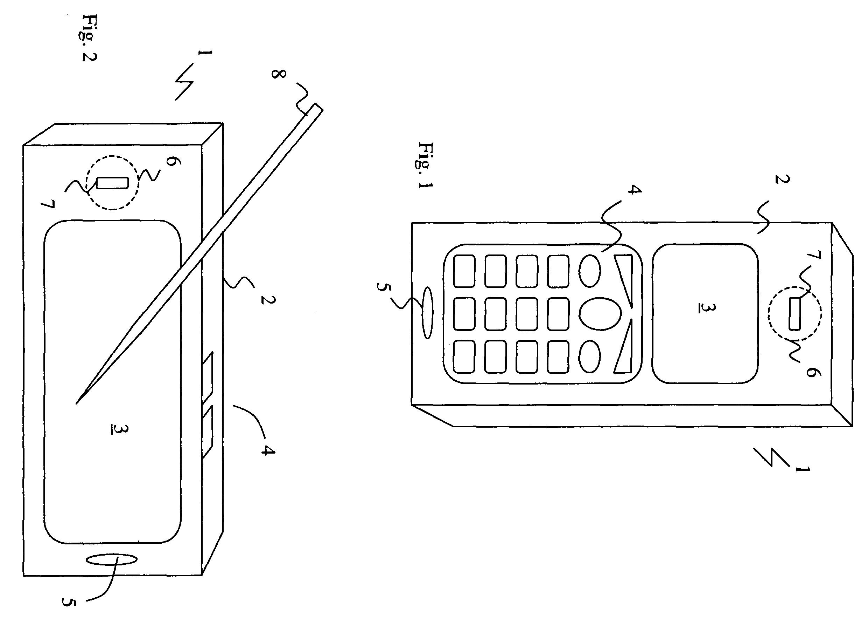

Figure 1 discloses a typical example of a state of the art mobile phone 1, carried by a housing or chassis 2. The size of a keypad 4 and a display 3 basically sets the limit of how small the terminal 1 can be. However, to be able to work as a standard phone for voice interaction, the terminal 1 also includes a microphone 5 and a speaker 6, preferably arranged at opposite ends of the terminal 1. Figure 2 discloses a different embodiment of a state of the art communication terminal 1, wherein the display 3 occupies a larger portion of the front side of the terminal. Several of the functions of the keypad 4 have been included in a graphical user interface applicable to the display 3, rendering a data input interface having less keys. Those keys 4 may also be moved to the side of the communication terminal in order to allow for the display 3 to occupy a larger portion of the front side of terminal 1. A specific tool 8 may be provided for inputting data on a touch-sensitive screen of the display 3. Figs 1 and 2 show two typical examples of state of the art communication terminals 1, whereas the skilled persons will realise that combinations of the two are also well known as well as other designs, such as a so called clamshell type terminal.

In the state of the art communication terminal a terminal output 7 is mounted on the front of the terminal above the display with the speaker 6 immediately behind the output 7, as shown in Figs 1 and 2. This means that even with a smallest available speaker used today, with a diameter of about 13 mm, the terminal would be approximately this much longer in its longitudinal extension than what would have been the case if only the display 3 and/or keypad 4 had defined the length of the terminal 1. The antenna of the terminal is generally located at the upper portion of the terminal, and a lower portion of the terminal being occupied by a battery. Placing the speaker 6 behind the display 3 would therefore increase the thickness of the terminal 1 since it would have to compete with the antenna for the relevant space.

The performance of the speaker is to a high extent dependent on the back volume, i.e. the acoustic resonance cavity behind the speaker. As mentioned above, almost every phone today has the speaker position in the upper parts of the front of the terminal above the display and keyboard. However, also the antenna is preferably placed at the upper portion of the terminal. Today, built in antennas are primarily used, such as e.g. PIFAs, Planar Inverted-F Antenna, or micro strip antennas. Such designs also require a certain space or distance between an active antenna element and a ground plane, in order to provide sufficient bandwidth. Consequently, placing the speaker and the antenna one over the other, in a longitudinal direction of the terminal, will add to the length of the terminal. On the other hand, placing the antenna behind the speaker will add to the thickness of the terminal. Therefore, both the antenna design and the speaker design, and their relative position, will affect the dimensions of the terminal.

A solution to this problem of miniaturisation of communication terminals is proposed in WO 00/38475, in which the acoustic resonance chamber of the speaker is completely or partly located in the electromagnetic resonance chamber of the antenna. The use of a single resonance chamber instead of two separate ones makes it possible to manufacture smaller communication devices. According to the proposed solutions the speaker is placed outside the resonance chamber, the backside of the speaker being connected to the resonance chamber by at least one acoustic channel. However, the speaker and the common chamber will still both add to the thickness of the terminal.

Another solution is proposed in DE 10 052 909, in which an antenna element is formed on a surface of an insulting carrier in the form of two half-shells. On the opposite surface of the insulating carrier a speaker is mounted. The solution proposed in this document corresponds to the preamble of claim 1.

### Summary of the invention

It is an object of the present invention to provide a novel speaker and antenna arrangement for a communication terminal, meeting the general market demand for small size and light weight terminals.

Furthermore, an aspect of this object is to provide such a speaker and antenna arrangement, which can be produced in a reliable and cost-effective manufacturing process.

Yet another aspect of this object is to provide such a speaker arrangement integrated with an antenna element of the terminal, in a way that does not impede antenna performance.

According to a first aspect of the present invention, this object is fulfilled by an integrated speaker and antenna according to claim 1.

Further details of the integrated speaker and antenna are defined in the claims dependent on claim 1.

According to a second aspect of the present invention, the stated object is fulfilled by a radio communication terminal according to claim 19, comprising a combined speaker and antenna as recited above.

According to a third aspect of the present invention, the stated object is fulfilled by a method for producing an integrated speaker and antenna, in accordance with claim 20.

### Brief description of the drawings

Further features and advantages of the present invention will become more apparent from the following description of preferred embodiments, with reference to the accompanying drawings, on which
Fig 1 schematically shows a typical communication terminal design of a first type;
Fig. 2 schematically illustrates a typical communication terminal design of a second type;
Fig. 3 illustrates an integrated speaker and antenna element carrier according to an embodiment of the present invention;
Fig. 4 illustrates a speaker for use with a carrier according to Fig. 3;
Fig. 5 illustrates an integrated speaker and antenna element carrier according to Fig. 3 with a speaker attached;
Fig. 6 illustrates a spacer member devised for assembly with a device as shown in Fig. 3, according to an embodiment of the invention;
Figs 7 to 9 illustrate assembly of the integrated speaker and antenna element of Fig. 5 with the spacer member of Fig. 6, in accordance with an embodiment of the invention;
Figs 10 to 11 illustrates how an assembled device as shown in Fig. 9 is mounted to a carrier, such as a printed circuit board PCB, in accordance with an embodiment of the invention; and
Fig. 12 illustrates an elevated view of the assembled and mounted device of Fig. 11, in accordance with an embodiment of the invention.

### Detailed description of preferred embodiments

The present description refers to communications terminals as a device in which to implement the speaker configuration according to the present invention. The communication terminal includes all mobile equipment devised for radio communication with a radio station, which radio station also may be a mobile terminal or e.g. a stationary base station. Consequently, the term "communication terminal" includes mobile phones, pagers, communicators, electronic organisers, smart phones, PDA:s (Personal Digit Assistants), vehicle-mounted radio communication devices or the like, as well as portable laptop computers devised for wireless communication in for instance WLAN (Wireless Local Area Network). Furthermore, since the design and present invention is suitable for but not restricted to mobile use, the term "communication terminal" should also be understood as to include any stationary device arranged for radio communication, such as for instance desk top computers, printers, fax machines and so on, devised to operate with radio communication with each other or some other radio station. Hence, although the structure and characteristics of the combined antenna and speaker design according to the invention is mainly described herein, by way of example, in the implementation in a mobile phone, this is not to be interpreted as excluding the implementation of the inventive design in other types of radio terminals, such as those listed above. Furthermore, it should be emphasised that the term "comprising" or "comprises" when used in this description and in the appended claims to indicate included features, elements or steps, is in no way to be interpreted as excluding the presence of other features, elements or steps than those expressed or stated.

Fig. 3 illustrates a basic device according to the invention, constituting a combined antenna element and speaker carrier. A sheet of flexible film in an electrically non-conductive material is provided. The material is preferably some form of polymer, e.g. a polyimide such as Kapton®. The film has a first portion 31 which preferably represents a major portion of the surface of the film. In the illustrated exemplary embodiment, first portion 31 is rectangular, but it may have alternative shapes dependent on the particular application. First portion 31 has a coating or layer of electrically conductive material, such as copper, and first portion 31 represents an antenna element 31 for a radio antenna. In a preferred embodiment, first portion 31 is a single and continuous conductive area, usable as a ground plane for a radio antenna. Alternatively, the first portion 31 may be an active antenna element with a (not shown) structure defining resonance for suitable radio frequencies. This will be further described below.

An aperture, or set of apertures, 32 is provided in said first portion 31. This aperture 32 represents an audio or sound transfer opening in the flexible film, for the purpose of conveying sound waves from a speaker through the film.

A second, elongated, portion 33 of the film extends from a side of first portion 31. Second portion 33 has a substantially non-conductive surface. However, at least a first lead 34 is formed on the second portion 33, extending from a proximal connection pad 36, located on the film close to first portion 31, but electrically insulated from the first portion 31. Said first lead extends from said proximal connection pad 36, along the extension of the second portion 33, to a distal connection pad 38 located at an outer end 40 of the second portion 33. Preferably, second portion 33 carries two separate leads 34,35 from proximal connection pads 36,37 to distal connection pads 38,39 at said outer end of the elongated second portion 33. Preferably both are insulated from the first portion 31, though in one embodiment one of the leads is connected to the first portion.

In a preferred embodiment, a device according to the invention, and as illustrated in Fig. 3, is manufactured by a coating, etching and cutting procedure. A flexible film of an insulating material is provided. The film is coated, e.g. by means of a suitable well known procedure, with a conductive material such as copper. The coating may be performed with a mask applied to the film or coating device, such that the coating material is only applied at desired locations. However, in a preferred embodiment the coat is applied over the entire flexible film sheet. Subsequently, selected portions of the conductive material are removed from the film, to define the first conductive surface portion 31, and one ore more leads 34,35 and their connection pads. This step is preferably exercised by etching the conductive material using a suitable dry or wet etching method and a mask defining the desired pattern. Finally, the film is cut such that the elongated second portion carrying the leads, and the aperture 32, are shaped. Needless to say, plural structures like the one illustrated in Fig. 3 may be shaped by coating and etching on a single piece of flexible film, wherein said plural structures are separated in the subsequent cutting step.

Fig. 4 illustrates a speaker 41 suitable for use with a device according to Fig. 3. In accordance with the invention, the lead 34 on the second portion 33 of the film is preferably used as a speaker signal lead. Consequently, the outer end 40 of second portion 33 is adapted for connection of a speaker, such as speaker 41. Fig. 4 illustrates a back side of speaker 41, and connectors 42, 43 which are connectable to speaker signal leads, preferably by soldering or thermo-compression.

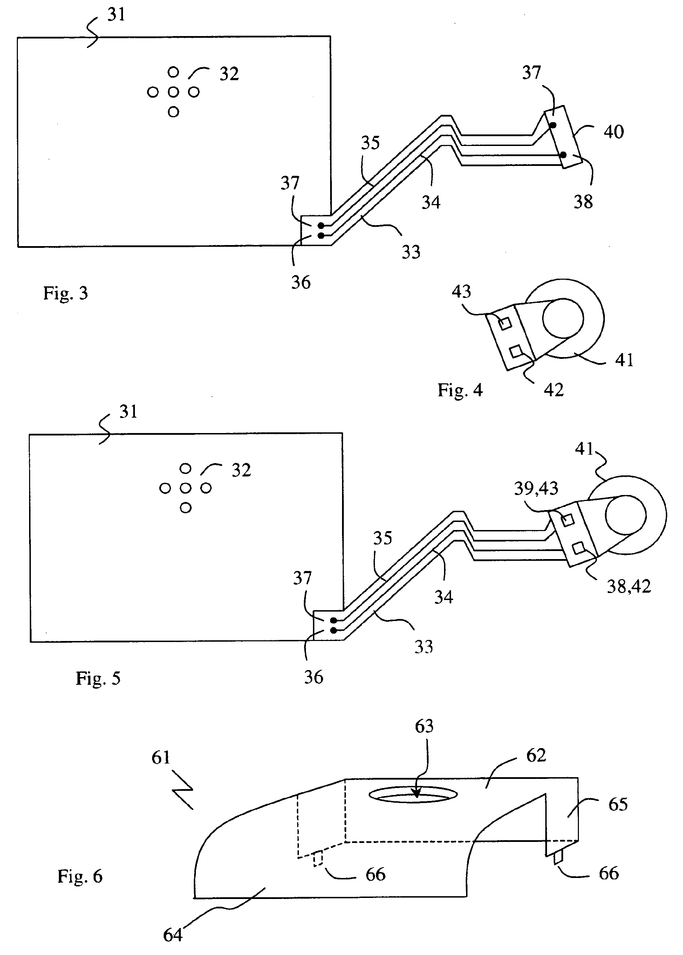

Fig. 5 illustrates the device according to Fig. 3 when connected to speaker 41 of Fig. 4. Distal connection pad 38, which constitutes a speaker connection pad 38, is connected to speaker connector 42, whereas distal connection pad 39, which constitutes a speaker connection pad 39, is connected to speaker connector 43. The speaker 41 may also be mechanically fixed to outer end 40, e.g. by clamping on the outer end 40 of the film. Fig. 5 illustrates a combined speaker and antenna element 50, representing a single component with two distinctly different technical features. As will be described below, the combined device according to Fig. 5 provides a structure with several advantages, as will become clear. The following description defines the use of the present invention in a radio communication terminal, and particularly on the application of the present invention in a mobile phone. However, as previously outlined, the present invention is not restricted to this field, which is to be regarded as a suitable application.

Fig. 6 illustrates an embodiment of a spacer element 61, adapted for use with the combined speaker and antenna element according to the invention. In a low profile, built in, radio antenna for mobile communication, such as a PIFA, the antenna comprises a substantially planar active antenna element and a ground plane. Preferably, the active antenna element and the ground plane are arranged at a certain distance from each other, in order to provide a suitable bandwidth for the antenna at predetermined frequencies. The spacer 61 is made of a non-conductive material, such as some form of plastics. It has an upper surface 62 to which the flexible film is attachable, and in which upper surface a recess 63 is made for housing the speaker 41. In the illustrated embodiment, the upper surface 62 is curved such that a downwards projecting wall 64 is defined. As will be clear, the curved shape provides a suitable interface to the flexible film. The spacer further has spacing walls 65 projecting downwards from the upper surface 62. At the opposite side of upper surface 62, lower edges of spacing walls 65 define, together with the lower edge of wall 64, a lower plane side of the spacer 61. One or more protruding engagement members 66 is/are formed at the lower side of spacer 61, for engagement with a support structure.

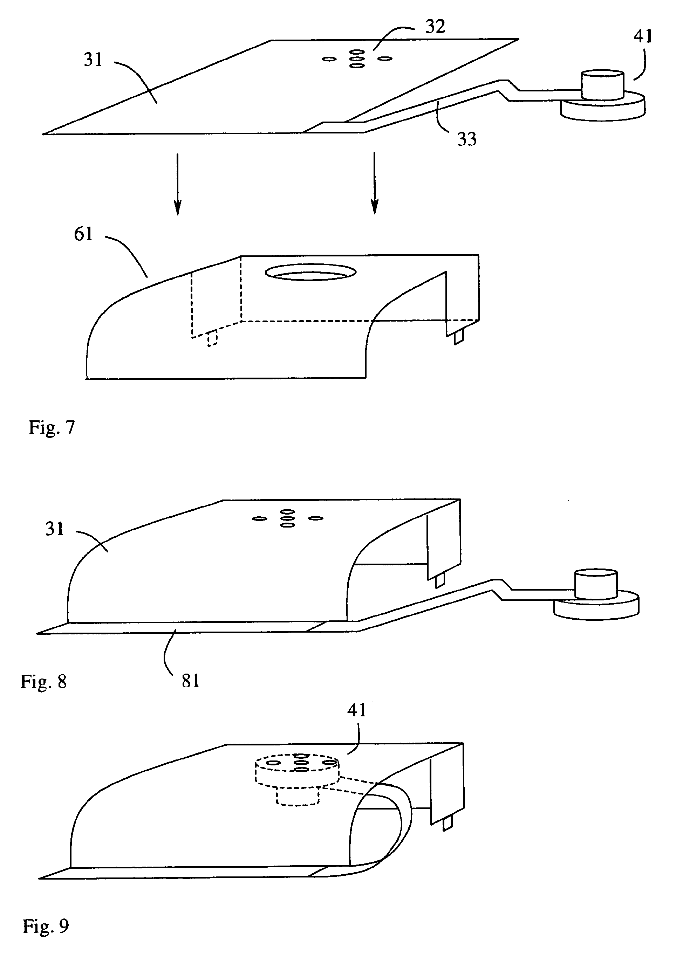

Figs 7 to 9 illustrate mounting of the combined speaker and antenna element 50 of Fig. 5 to the spacer of Fig. 6, in a perspective view, though the leads and pads of the second portion 33 are left out for the sake of clarity. The first portion 31 carrying the conductive coating or layer is attached to the upper side 62 of spacer 61, preferably by use of an adhesive. The aperture 32 is oriented over the recess 63, and the film is pressed to the upper surface 62 such that it follows the curved shape of upper surface 62. In an alternative embodiment, wall 64 may be straight, like walls 65, but in that case there will be an edge where wall 64 meets upper surface 62. Such an embodiment may be employed if the flexible film allows sharp folding about an edge.

As is evident from Fig. 8, a lowermost portion 81 of the flexible film will extend outside spacer 61 when the film is attached thereto. This lowermost portion 81 preferably includes a lower part of first portion 31, and a proximal part of second portion 33 including proximal connection pads 36,37. Furthermore, second portion 33 preferably extends from this lowermost portion 81.

Fig. 9 illustrates how speaker 41 has been placed in the recess 63, by use of suitable attachment means. When positioning speaker 41 under the first portion 31 of the film, the second portion 33 is bent such that a front side of speaker 41 faces the first portion 31, as is illustrated in Fig. 9. As a result in accordance with the invention, the spacing between two cooperating antenna elements is not only used for providing sufficient bandwidth to the antenna, but also for housing the speaker 41, thereby also providing an acoustic resonance cavity for speaker 41. In Fig. 8, as well as in Figs 3 and 5, it has been illustrated that the elongated second portion 33 is not entirely straight, although it may be. Instead, second portion 33 has at least one bend in the plane of the film, in the rested state of the film. The purpose thereof is to suitably orient the elongated second portion 33 when it is bent under a side edge of the first portion 31, such that speaker 41 is positioned at the aperture 32.

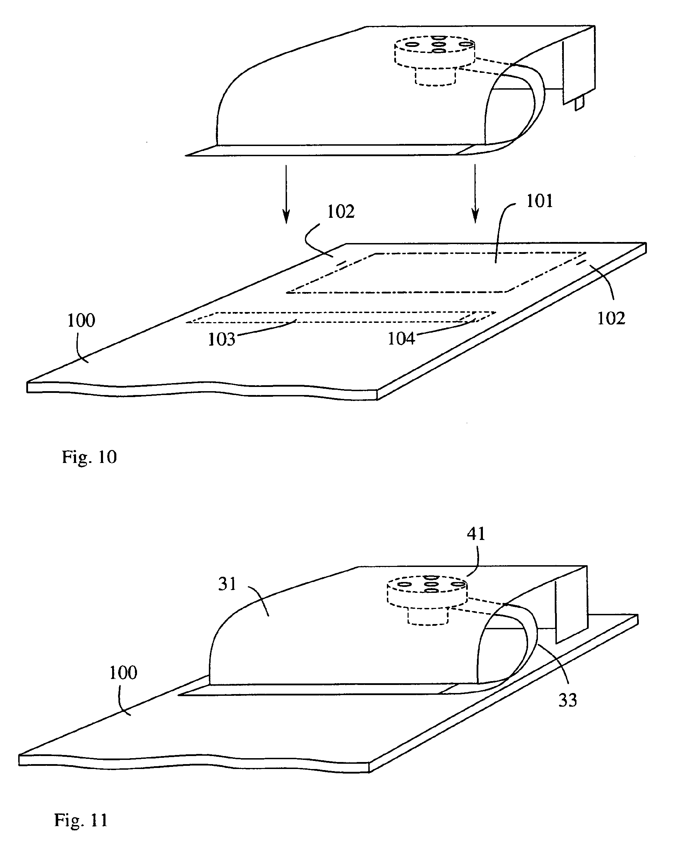

Figs 10 and 11 illustrates how the assembled device of Fig. 8 is attached to a support structure 100, for which only a top end is shown. Support structure 100 is preferably a Printed Circuit Board (PCB) carried in a chassis or housing of a radio communication terminal. The PCB 100 supports the electronics of terminal, though not shown in these drawings.

In Fig. 10 the support structure 100 is illustrated separate from the assembled spacer and flexible film. At 101 a cooperating antenna element is indicated by a dash-dotted line. Antenna element 101 cooperates, as previously mentioned, in a manner well known to the skilled person, with the antenna element constituted by the first conductive portion 31. Thanks to spacer 61, antenna element 101 and first portion 31 of the film will be arranged at a certain distance from each other. Antenna element 101 may be a ground plane to an active antenna element provided by first portion 31. However, in a preferred embodiment antenna element 101 is an active part of the antenna, having a suitable pattern in a plane of the support structure such that resonance is established for predetermined radio frequencies. In this preferred embodiment, first portion 31 of the flexible film provides the ground plane for the antenna.

One or more recessed engagement members 102 is/are formed in the support structure, for engagement with the protruding engagement members 66 at the lower side of spacer 61. Engagement of spacer 61 to support structure 100 may be achieved by a self-locking snap lock.

A conductive connection area 103,104 is further illustrated by dashed lines in Fig. 10, devised for connection with the lowermost portion 81 of the flexible film. Preferably, the conductive first portion 31 of the flexible film is connected at lowermost portion 81 to a first section 103 of said connection area by hot bar soldering. This way connection between support structure 100 and first portion 31 is created along substantially the entire width of first portion 31. In a preferred embodiment, an auxiliary ground plane (not shown) is provided in the support structure 100, in an intermediate layer or on a surface thereof, which auxiliary ground plane is connected to the ground plane of first portion 31 at connection area section 103. This way, and particularly due to the wide connection at connection area 103, a large and continuous ground plane is provided, which will be beneficial to the performance of the antenna. The auxiliary ground plane may extend a limited portion of the length of the support structure, but preferably substantially all the way to a an end side of the support structure 100, opposite the illustrated top end. A second section 104, electrically separate from first section 103, of the connection area is provided for connection with the proximal connection pad 36, or separate connection to proximal connection pads 36,37 if there are plural leads 34, 35, of second portion 33. The entire lowermost portion 81 is preferably attached to the designated sections 103,104 of said connection area in a single hot bar soldering action.

Fig. 11 illustrates the device according to Fig. 9 when assembled to the support structure 100, in accordance with the arrows in Fig. 10.

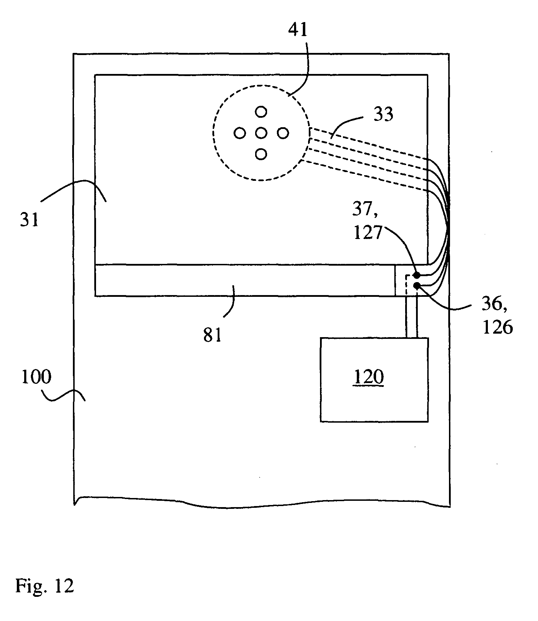

Fig. 12 shows a top view of the assembled device according to Fig. 11. The conductive first portion 31 of the flexible film extends into lowermost portion 81, at which it is connected to the designated section 103 of the connection area on the support structure 100, and preferably the auxiliary ground plane. The second portion 33 of the flexible film is bent and folded such that speaker 41, attached to the outer end 40 of second portion 33, is placed behind aperture 32. At said second section 104 of connection area, proximal connection pads 36,37 are connected to respective connectors 126,127. These connectors 126,127 are, in turn, connected to speaker control circuitry 120 arranged on said support structure, devised to provide speaker signals to speaker 41.

The present invention brings about several advantages, thanks to the inventive idea to mount the speaker inside the antenna cavity, where one antenna element and the speaker are carried by a common structure provided by a flexible film.

First of all, the invention brings about space savings. A terminal or housing, implementing the invention, may be designed with a thickness basically defined by the distance between the flexible film and the support structure, e.g. a PCB, since the thickness contribution from the speaker has been eliminated. Furthermore, even though the antenna cavity 21 has been partly occupied by the speaker, experimental laboratory tests on this design have surprisingly shown that the presence of the speaker will not result in reduced antenna performance if tuned properly. The use of hot bar soldering will not lead to bulging solder pads, which also contributes to saving space.

Second, a single component having plural functions, i.e. providing an antenna element, leads to a speaker, and pads for connection both to the speaker and speaker control circuitry, provides a logistics advantage since fewer details are involved in the assembly.

By the proposed design the amount of metal in the vicinity of the antenna is minimised, since no extra contacts or wires to the speaker are needed, and very little metal is included in the thin and narrow leads formed on the film. This means less negative impact on the performance of the antenna.

Finally, the hot bar soldering along substantially the entire width of the antenna element provided by first portion 31 on the flexible film, ensures a large continuous ground plane with increased antenna performance as a consequence.

The foregoing has described the principles, preferred embodiments and modes of operation of the present invention. However, the above described embodiments should be regarded as illustrative rather than restrictive, and it should be appreciated that variations may be made in those embodiments by those skilled in the arts without departing from the scope of the present invention as defined in the appended claims.

## Claims

1. Integrated speaker and antenna for a communication terminal, comprising a speaker (41), an antenna element, and an insulating carrier suspending the speaker and the antenna element, **characterised in that** the insulating carrier includes a flexible film, wherein
a conductive portion (31) forming a first antenna element is disposed on the flexible film;
an aperture (32) is formed through the flexible film;
an elongated portion (33) of the flexible film extends from adjacent (36) to the conductive portion, carrying a conductive lead (34) connected at its outer end (40) to the speaker, wherein the elongated portion is bent such that the speaker is positioned at the aperture (32).

2. The integrated speaker and antenna as recited in claim 1, **characterised in that** said elongated portion carries a pair of conductive leads (34,35) from adjacent said conductive portion to respective speaker connection pads (38,39) at said outer end (40).

3. The integrated speaker and antenna as recited in claim 1, **characterised in that** said elongated portion carries at least one conductive lead which is electrically insulated from said conductive portion.

4. The integrated speaker and antenna as recited in claim 1, **characterised in that** said conductive portion and said lead form parts of a layer of a conductive material coated on said flexible film.

5. The integrated speaker and antenna as recited in claim 1, **characterised in that** said conductive lead extends from a connection pad (36,37) arranged adjacent to said conductive portion at a straight edge of said flexible film.

6. The integrated speaker and antenna as recited in claim 1, **characterised in that** said conductive portion is a ground plane of an antenna for a radio communication terminal.

7. The integrated speaker and antenna as recited in claim 1, **characterised in that** said conductive portion is an antenna element of an antenna for a radio communication terminal, and has a pattern adapted to provide resonance at predetermined radio frequencies.

8. The integrated speaker and antenna as recited in claim 6, **characterised by** a support structure (100) carrying a second antenna element (101), arranged at a predetermined distance from said first antenna element

9. The integrated speaker and antenna as recited in claim 8, **characterised in that** said flexible film is attached to said support structure such that said conductive portion is electrically connected (81,103) to a ground plane of said support structure.

10. The integrated speaker and antenna as recited in claim 8, **characterised in that** said flexible film is attached at a side edge (81) thereof, to said support structure, at which second side edge a connector pad (126,127) to said conductive lead is arranged.

11. The integrated speaker and antenna as recited in claim 10, **characterised in that** said connector pad is connected, at said side edge, to speaker control circuitry (120) arranged on said support structure.

12. The integrated speaker and antenna as recited in claim 8, **characterised in that** said flexible film is bar soldered at a straight edge (81) to said support structure, at which straight edge said conductive portion is electrically connected (103) to a ground plane of said support structure, and a connector pad (104) to said conductive lead is connected to speaker control circuitry (120) arranged on said support structure.

13. The integrated speaker and antenna as recited in claim 8, **characterised in that** an insulating spacer (61) is arranged intermediate said support structure and said flexible film, defining said predetermined distance between said first and second antenna elements.

14. The integrated speaker and antenna as recited in claim 13, **characterised in that** said spacer comprises speaker attachment means (63), devised to secure said speaker adjacent to said aperture.

15. The integrated speaker and antenna as recited in claim 13, **characterised in that** said flexible film is attached to said spacer with an adhesive.

16. The integrated speaker and antenna as recited in claim 13, **characterised in that** said spacer is attached to said support structure by cooperating engagement members (66,102).

17. The integrated speaker and antenna as recited in claim 13, **characterised in that** said spacer has a protruding member (66) engaging with a recess (102) in said support structure.

18. The integrated speaker and antenna as recited in claim 8, **characterised in that** said support structure is a printed circuit board of a radio communication terminal.

19. Radio communication terminal, comprising an integrated speaker and antenna as recited in any of the previous claims.

20. Method for producing an integrated speaker and antenna for a communication terminal as recited in any of the claims 1-18, **characterised by** the steps of:
- providing a flexible film of an insulating material, having a conductive surface portion, and an elongated portion carrying a lead insulated from said conductive portion and extending away from adjacent to said conductive portion;
- attaching a speaker an outer end of the elongated portion, connected to said lead;
- forming an aperture through said flexible film, and
- bending the elongated portion such that said speaker is positioned at the aperture.

21. The method as recited in claim 20, wherein the step of providing a flexible film comprises the steps of:
- coating said insulating film with a conductive material;
- removing selected portions of the conductive material from the film, to define the first conductive surface portion and the lead; and
- cutting the film such that the elongated second portion thereof, carrying said lead, is shaped;

22. The method as recited in claim 21, **characterised by** said removing of selected portions of the conductive material including the step of etching.

23. The method as recited in claim 21, **characterised by** defining, in said step of removing of selected portions of the conductive material, a pair of separate leads, insulated from said conductive portion and extending away from adjacent to said conductive portion.

## Patentansprüche

1. Integrierter Lautsprecher und Antenne für ein Kommunikationsendgerät, aufweisend einen Lautsprecher (41), ein Antennenelement und einen isolierenden Träger, der den Lautsprecher und das Antennenelement hängend hält, **dadurch gekennzeichnet, dass** der isolierende Träger eine flexible Folie enthält, wobei
ein leitender Abschnitt (31), der ein erstes Antennenelement bildet, auf der flexiblen Folie vorgesehen ist;
eine Öffnung (32) durch die flexible Folie hindurch ausgebildet ist;
ein verlängerter Abschnitt (33) der flexiblen Folie von nahe dem leitenden Abschnitt wegragt, der eine Leiterbahn (34) trägt, die an ihrem Außenende (40) mit dem Lautsprecher verbunden ist, wobei der verlängerte Abschnitt derart gebogen ist, dass der Lautsprecher an der Öffnung (32) positioniert ist.

2. Integrierter Lautsprecher und Antenne nach Anspruch 1, **dadurch gekennzeichnet, dass** der verlängerte Abschnitt ein Paar von Leiterbahnen (34, 35) von nahe dem leitenden Abschnitt zu jeweiligen Lautsprecher-Verbindungsfeldern (38, 39) an dem Außenende (40) trägt.

3. Integrierter Lautsprecher und Antenne nach Anspruch 1, **dadurch gekennzeichnet, dass** der verlängerte Abschnitt zumindest eine Leiterbahn trägt, die von dem leitenden Abschnitt elektrisch isoliert ist.

4. Integrierter Lautsprecher und Antenne nach Anspruch 1, **dadurch gekennzeichnet, dass** der leitende Abschnitt und die Leiterbahn Teile einer Schicht aus einem leitenden Material bilden, die die flexible Folie überzieht.

5. Integrierter Lautsprecher und Antenne nach Anspruch 1, **dadurch gekennzeichnet, dass** die Leiterbahn von einem Verbindungsfeld (36, 37), das angrenzend zum leitenden Abschnitt an einer geradlinigen Kante der flexiblen Folie vorgesehen ist, wegragt.

6. Integrierter Lautsprecher und Antenne nach Anspruch 1, **dadurch gekennzeichnet, dass** der leitende Abschnitt eine Masseebene einer Antenne für ein Funkkommunikationsendgerät ist.

7. Integrierter Lautsprecher und Antenne nach Anspruch 1, **dadurch gekennzeichnet, dass** der leitende Abschnitt ein Antennenelement einer Antenne für ein Funkkommunikationsendgerät ist und eine Musterform aufweist, die zum Bereitstellen von Resonanz bei vorbestimmten Funkfrequenzen angepasst ist.

8. Integrierter Lautsprecher und Antenne nach Anspruch 6, **gekennzeichnet durch** eine Tragkonstruktion (100), der ein zweites Antennenelement (101) trägt, das in einem vorbestimmten Abstand von dem ersten Antennenelement angeordnet ist.

9. Integrierter Lautsprecher und Antenne nach Anspruch 8, **dadurch gekennzeichnet, dass** die flexible Folie derart an der Tragkonstruktion angebracht ist, dass der leitende Abschnitt elektrisch (81, 103) mit einer Masseebene der Tragkonstruktion verbunden ist.

10. Integrierter Lautsprecher und Antenne nach Anspruch 8, **dadurch gekennzeichnet, dass** die flexible Folie an ihrem einen Seitenrand (81) auf der Tragkonstruktion angebracht ist, wobei an diesem zweiten Seitenrand ein Verbindungsfeld (126, 127) zu der Leiterbahn vorgesehen ist.

11. Integrierter Lautsprecher und Antenne nach Anspruch 10, **dadurch gekennzeichnet, dass** das Verbindungsfeld an dem Seitenrand mit einer Lautsprechersteuerschaltung (120) verbunden ist, die auf der Tragkonstruktion angeordnet ist.

12. Integrierter Lautsprecher und Antenne nach Anspruch 8, **dadurch gekennzeichnet, dass** die flexible Folie an einem geraden Rand (81) an der Tragkonstruktion stangen-gelötet ist, wobei an dem geraden Rand der leitende Abschnitt elektrisch (103) mit einer Masseebene der Tragkonstruktion verbunden ist, und ein Verbindungsfeld (104) zu der Leiterbahn mit einer Lautsprechersteuerschaltung (120) verbunden ist, die auf der Tragkonstruktion angeordnet ist.

13. Integrierter Lautsprecher und Antenne nach Anspruch 8, **dadurch gekennzeichnet, dass** ein isolierender Abstandhalter (61) zwischen der Tragkonstruktion und der flexiblen Folie angeordnet ist, der den vorbestimmten Abstand zwischen dem ersten und zweiten Antennenelement definiert.

14. Integrierter Lautsprecher und Antenne nach Anspruch 13, **dadurch gekennzeichnet, dass** der Abstandhalter ein Lautsprecheranbringungsmittel (63) aufweist, das zum Befestigen des Lautsprechers angrenzend zu der Öffnung vorgesehen ist.

15. Integrierter Lautsprecher und Antenne nach Anspruch 13, **dadurch gekennzeichnet, dass** die flexible Folie an dem Abstandhalter mit einem Klebstoff angebracht ist.

16. Integrierter Lautsprecher und Antenne nach Anspruch 13, **dadurch gekennzeichnet, dass** der Abstandhalter an der Tragkonstruktion mittels zusammenwirkender Eingriffsglieder (66, 102) angebracht ist.

17. Integrierter Lautsprecher und Antenne nach Anspruch 13, **dadurch gekennzeichnet, dass** der Abstandhalter ein vorstehendes Glied (66) aufweist, das mit einer Aussparung (102) in der Tragkonstruktion eingreift.

18. Integrierter Lautsprecher und Antenne nach Anspruch 8, **dadurch gekennzeichnet, dass** die Tragkonstruktion eine gedruckte Schaltung eines Funkkommunikationsendgerätes ist.

19. Funkkommunikationsendgerät, das einen integrierten Lautsprecher und eine Antenne nach einem der vorhergehenden Ansprüche aufweist.

20. Verfahren zum Herstellen eines integrierten Lautsprechers und einer Antenne für ein Funkkommunikationsendgerät nach einem der Ansprüche 1-18, **gekennzeichnet durch** die Schritte:
- Bereitstellen einer flexiblen Folie aus einem isolierenden Material, die einen leitenden Flächenabschnitt aufweist, und eines verlängerten Abschnitts, der eine Leiterbahn trägt, die von dem leitenden Abschnitt isoliert ist und von nahe dem leitenden Abschnitt wegragt;
- Anbringen eines Lautsprechers an einem Außenende des verlängerten Abschnitts, der mit der Leiterbahn verbunden ist;
- Bilden eine Öffnung **durch** die flexible Folie hindurch, und
- Biegen des verlängerten Abschnitts derart, dass der Lautsprecher an der Öffnung positioniert wird.

21. Verfahren nach Anspruch 20, wobei der Schritt der Bereitstellung einer flexiblen Folie die Schritte aufweist:
- Beschichten der isolierenden Folie mit einem leitenden Material;
- Entfernen ausgewählter Abschnitte des leitenden Materials von der Folie, um den ersten leitenden Flächenabschnitt und die Leiterbahn zu definieren; und
- Schneiden der Folie derart, dass dessen verlängerter Abschnitt, der die Leiterbahn trägt, geformt wird;

22. Verfahren nach Anspruch 21, **gekennzeichnet durch** das Entfernen ausgewählter Abschnitte des leitenden Materials den Schritt einer Ätzung enthält.

23. Verfahren nach Anspruch 21, **gekennzeichnet durch** das Definieren, in dem Schritt des Entfernens ausgewählter Abschnitte des leitenden Materials, eines Paars separater Leiterbahnen, die von dem leitenden Abschnitt isoliert sind und von nahe dem leitenden Abschnitt wegragen.

## Revendications

1. Haut-parleur et antenne intégrés pour un terminal de communication, comprenant un haut-parleur (41), un élément d'antenne et un support isolant portant le haut-parleur et l'élément d'antenne, **caractérisé en ce que** le support isolant comprend un film flexible, dans lesquels
une partie conductrice (31) formant un premier élément d'antenne est placée sur le film flexible ;
une ouverture (32) est ménagée au travers du film flexible ;
une partie allongée (33) du film flexible s'étend d'un point adjacent (36) à la partie conductrice et porte une piste conductrice (34) connectée à son extrémité extérieure (40) au haut-parleur, la partie allongée étant repliée de manière à ce que le haut-parleur soit positionné au niveau de l'ouverture (32).

2. Haut-parleur et antenne intégrés selon la revendication 1, **caractérisés en ce que** ladite partie allongée porte une paire de pistes conductrices (34, 35) entre un point adjacent à ladite partie conductrice et des pastilles de connexion (38, 39) respectives du haut-parleur à ladite extrémité extérieure (40).

3. Haut-parleur et antenne intégrés selon la revendication 1, **caractérisés en ce que** ladite partie allongée porte au moins une piste conductrice qui est isolée électriquement de ladite partie conductrice.

4. Haut-parleur et antenne intégrés selon la revendication 1, **caractérisés en ce que** ladite partie conductrice et ladite piste forment des parties d'une couche d'un matériau conducteur revêtant ledit film flexible.

5. Haut-parleur et antenne intégrés selon la revendication 1, **caractérisés en ce que** ladite piste conductrice s'étend entre une pastille de connexion (36, 37) disposée à côté de ladite partie conductrice au niveau d'un bord droit dudit film flexible.

6. Haut-parleur et antenne intégrés selon la revendication 1, **caractérisés en ce que** ladite partie conductrice est un plan de masse d'une antenne pour un terminal de radiocommunication.

7. Haut-parleur et antenne intégrés selon la revendication 1, **caractérisés en ce que** ladite partie conductrice est un élément d'antenne d'une antenne destinée à un terminal de radiocommunication et possède une forme conçue pour assurer une résonance à des fréquences radio prédéterminées.

8. Haut-parleur et antenne intégrés selon la revendication 6, **caractérisés par** une structure de support (100) portant un second élément d'antenne (101) et disposée à une distance prédéterminée dudit premier élément d'antenne.

9. Haut-parleur et antenne intégrés selon la revendication 8, **caractérisés en ce que** ledit film flexible est fixé sur ladite structure de support de telle manière que ladite partie conductrice soit connectée électriquement (81, 103) à un plan de masse de ladite structure de support.

10. Haut-parleur et antenne intégrés selon la revendication 8, **caractérisés en ce que** ledit film flexible est fixé à ladite structure de support par un de ses bords latéraux (81), une pastille de connexion (126, 127) vers ladite piste conductrice étant implantée sur le second bord latéral.

11. Haut-parleur et antenne intégrés selon la revendication 10, **caractérisés en ce que** ladite pastille de connexion est connectée, sur ledit bord latéral, à un circuit de commande du haut-parleur (120) qui est disposé sur ladite structure de support.

12. Haut-parleur et antenne intégrés selon la revendication 8, **caractérisés en ce que** ledit film flexible est soudé à la baguette sur un bord droit (81) sur ladite structure de support, sur le bord droit de laquelle ladite partie conductrice est connectée électriquement (103) à un plan de masse de ladite structure de support et une pastille de connexion (104) menant à ladite piste conductrice est connectée au circuit de commande du haut-parleur (120) implanté sur ladite structure de support.

13. Haut-parleur et antenne intégrés selon la revendication 8, **caractérisés en ce qu'**une plaque d'écartement isolante (61) est disposée entre ladite structure de support et ledit film flexible, afin de définir ladite distance prédéterminée entre lesdits premier et second éléments d'antenne.

14. Haut-parleur et antenne intégrés selon la revendication 13, **caractérisés en ce que** ladite plaque d'écartement comprend un moyen de fixation de haut-parleur (63) conçu pour fixer ledit haut-parleur au niveau² de ladite ouverture.

15. Haut-parleur et antenne intégrés selon la revendication 13, **caractérisés en ce que** ledit film flexible est fixé sur ladite plaque d'écartement à l'aide d'un adhésif.

16. Haut-parleur et antenne intégrés selon la revendication 13, **caractérisés en ce que** ladite plaque d'écartement est fixée sur ladite structure de support par des éléments d'engagement (66, 102) qui coopèrent.

17. Haut-parleur et antenne intégrés selon la revendication 13, **caractérisés en ce que** ladite plaque d'écartement possède un élément en saillie (66) s'engageant dans un logement (102) dans ladite structure de support.

18. Haut-parleur et antenne intégrés selon la revendication 8, **caractérisés en ce que** ladite structure de support est une carte de circuits imprimés d'un terminal de radiocommunication.

19. Terminal de radiocommunication comprenant un haut-parleur et une antenne intégrés, selon l'une quelconque des revendications précédentes.

20. Procédé de production d'un haut-parleur et d'une antenne intégrés pour un terminal de communication, selon l'une quelconque des revendications 1 à 18, **caractérisé par** les étapes consistant à :
- fournir un film flexible fait dans un matériau isolant, ayant une partie de surface conductrice et une partie allongée portant un conducteur isolé de ladite partie conductrice et s'étendant à partir d'un point adjacent à ladite partie conductrice ;
- fixer un haut-parleur à une extrémité extérieure de la partie allongée, en le connectant audit conducteur ;
- former une ouverture au travers dudit film flexible ; et
- courber la partie allongée de manière à ce que ledit haut-parleur soit positionné au niveau de l'ouverture.

21. Procédé selon la revendication 20, dans lequel l'étape de fourniture d'un film flexible comprend les étapes consistant à :
- revêtir ledit film isolant d'un matériau conducteur ;
- éliminer sur le film des parties sélectionnées du matériau conducteur, afin de définir la première partie de surface conductrice et le conducteur ; et
- découper le film de manière à ce que la seconde partie allongée de celui-ci, qui porte ledit conducteur, soit ainsi formée.

22. Procédé selon la revendication 21, **caractérisé par le fait que** ladite étape d'élimination de parties sélectionnées du matériau conducteur comprend une étape de gravure.

23. Procédé selon la revendication 21, **caractérisé par** l'étape consistant à définir, dans ladite étape d'élimination de parties sélectionnées du matériau conducteur, une paire de conducteurs séparés, isolés de ladite partie conductrice et s'étendant à partir d'un point adjacent à ladite partie conductrice.
